# EUROPEAN PATENT APPLICATION

(11) **EP 4 410 465 A1**
(43) Date of publication of application: **07.08.2024**
(21) Application number: 22874664.0
(22) Date of filing: 16.09.2022
(51) Int. Cl.: B23K 3/03

(54) **CERAMIC ELECTRIC SOLDERING IRON**

(30) Priority: 29.09.2021 CN 202111147848
(71) Applicant: Chongqing Le-Mark Technology Co., Ltd., Chongqing 401329 (CN)
(72) Inventor: LEIGH, Peter, Chongqing 401329 (CN)
(74) Representative: Angerhausen, Christoph
(86) International application number: PCT/CN2022/119174
(87) International publication number: WO 2023/051277

(57) **Abstract**

The present application relates to the technical field of heating devices, and discloses a ceramic electric soldering iron, comprising a soldering iron head, a handle, a ceramic heating body, a positive wire and a negative wire, wherein the ceramic electric soldering iron further comprises a conductive wire and a ground wire, wherein the negative wire is connected to the soldering iron head, the positive wire is connected to the ceramic heating body, the conductive wire is connected to the negative wire at the front end of the ceramic heating body, the conductive wire is connected to a control measurement center (which can measure a grounding voltage and a grounding resistance), and the ground wire is connected to the handle. The ceramic electric soldering iron has the advantage of determining whether the grounding voltage less than 2 mV and the grounding resistance less than 2 Ω are satisfied.

## Description

### TECHNICAL FIELD

The present invention relates to the technical field of heating devices, and in particular, to a ceramic electric soldering iron.

### BACKGROUND

At present, an electric soldering iron is an indispensable tool in the electrical appliance and electronics manufacturing industries for welding components and conductive wires thereof. During use, electrostatic discharge (ESD) occurs due to charge transfer caused by proximity or direct contact of objects with different electrostatic potentials. ESD will cause damage to the internal devices of an electric soldering iron and reduce the service life thereof. However, China is an electronic product processing base, and there are many electronic product processing enterprises in various places in China; and for the ESD control work of most of these enterprises, the ESD20.20 scheme according to the US standard, which requires that the grounding voltage should be less than 2 mV and the grounding resistance should be less than 2 Ω, has not been established.

In the prior art, an anti-static effect is achieved by making a housing directly connected to a ground wire or using a ceramic heating body, such as a patent with application no. CN 200520065808.4, which discloses an AC-DC dual-purpose energy-saving, anti-static and constant-temperature silicon nitride electric soldering iron consisting of a heating core, a welding nozzle, a stainless steel sleeve, a heat insulating ceramic tube, an inclined heat insulating ceramic tube and a handle; wherein the heating core uses a silicon nitride heating body with different rated powers and is cylindrical, and a front segment thereof is inserted into the welding nozzle, and a rear segment thereof is provided with two lead-out electrodes for electrostatic protection of the heating body, which cannot ensure that the grounding voltage is less than 2 mV and the grounding resistance is less than 2Ω.

### SUMMARY

An object of the present invention is to provide a ceramic electric soldering iron to determine whether an ESD grounding voltage of less than 2 mV and a grounding resistance of less than 2 Ω are satisfied.

In order to achieve the object, the present invention adopts the following technical solutions.

A ceramic electric soldering iron, comprising a soldering iron head, a handle, a ceramic heating body, a positive wire and a negative wire, wherein the ceramic electric soldering iron further comprising a conductive wire and a ground wire, wherein the negative wire is connected to the soldering iron head, the positive wire is connected to the ceramic heating body, the conductive wire is connected to the negative wire at the front end of the ceramic heating body, the conductive wire is connected to a control measurement center (which can measure a grounding voltage and a grounding resistance), and the ground wire is connected to the handle.

In order to facilitate lead-out of the conductive wire and stable current transmission, the conductive wire is connected to the negative wire at the front end of the ceramic heating body by a first crown spring, and the closer the connection point is to the soldering iron head, the smaller the grounding voltage and grounding resistance.

In order to facilitate the lead-out of the negative wire and stable current transmission, a second crown spring is connected to the middle of the ceramic heating body, and the negative wire is led out through the second crown spring, and the negative wire is used for both power supply and temperature measurement output.

In order to facilitate lead-out of the positive wire and stable transmission of a current, a third crown spring is connected to the tail end of the ceramic heating body and leads out the positive wire, and the positive wire is used for both power supply and temperature measurement.

In order to eliminate static electricity without interfering with a technician's hand-held operation, the tail part of the handle is connected to the ground wire for ground connection.

In order to facilitate real-time temperature measurement, the positive and negative wires use a thermocouple material, and the positive and negative wires are led out of the handle and connected to the control center.

In order to control the temperature response speed and service life of the ceramic heating body, the ceramic heating body uses a silicon nitride full-ceramic heating body.

Beneficial effects: The ceramic electric soldering iron provided by the present invention uses a three-pole handle structure, and ensures composite functions of conductive heating, temperature control, elimination of static electricity and satisfaction of ESD requirements; the conductive wire is connected to the soldering iron head, and whether the requirements of ensuring a grounding voltage less than 2 mV and a grounding resistance less than 2Ω of the ESD standard are satisfied is detected by the control measurement center; and the conductive wire is led out at the tail part of the handle for grounding, so as to eliminate static electricity and detect the state of the handle to achieve actions such as auto-sleep, thereby effectively preventing damage to components. The head part conducts heat to the soldering iron head, the heating speed is fast, the temperature control precision is high, and a silicon carbide ceramic heating body is used. Due to its size, it can be processed to be smaller, the welding of high-precision electronic components that cannot be performed by a conventional electric soldering iron can be satisfied; moreover, the cost is low, the temperature control is accurate, the temperature return is fast, and the service life is long.

### BRIEF DESCRIPTION OF THE DRAWINGS

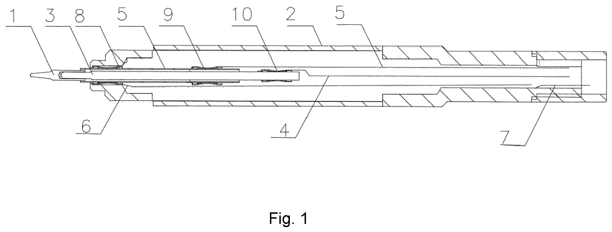

Fig. 1 is a schematic structural diagram of a ceramic electric soldering iron in an embodiment.

Reference numbers: 1. Soldering iron head; 2. Handle; 3. Ceramic heating body; 4. Positive wire; 5. Negative wire; 6. Conductive wire; 7. Ground wire; 8. First crown spring; 9. Second crown spring 10. Third crown spring.

### DETAILED DESCRIPTION OF THE EMBODIMENTS

Hereinafter, the present invention is further described in combination with the accompanying drawings and specific embodiments. However, the description of the following embodiments is provided only to aid in understanding the principle and core idea of the present invention and is not intended to limit the scope of protection of the present invention. It should be noted that for a person of ordinary skill in the art, improvements made to the present invention without departing from the principle of the present invention also fall within the scope of protection of the present invention.

### Embodiment

As shown in Fig. 1, a ceramic electric soldering iron comprises a soldering iron head 1, a handle 2, a ceramic heating body 3, a positive wire 4, a negative wire 5, a conductive wire 6 and a ground wire 7; the front end of the ceramic heating body 3 is connected to the soldering iron head 1, the handle 2 wraps around the ceramic heating body 3 and the soldering iron head 1, the soldering iron head 1 is led out from the front end of the handle 2, and the negative wire 5 is connected to the soldering iron head 1; the negative wire 5 is led out from the middle of the ceramic heating body 3, and the negative wire 5 and the positive wire 4 form a loop in the ceramic heating body 3 to heat the ceramic heating body 3, the conductive wire 6 is led out from the negative wire 5 at the front end of the ceramic heating body 3, the conductive wire 6 is connected to a control measurement center for measuring a grounding voltage and a grounding resistance; the closer the connection point is to the soldering iron head 1, the lower is an induced voltage, and the smaller are the grounding voltage and grounding resistance, and the measured numerical values satisfy the ESD requirements of a grounding voltage of less than 2 mV and a grounding resistance of less than 2 Ω. The conductive wire 6 is connected to the negative wire 5 at the front end of the ceramic heating body 3, and the ground wire 7 is connected to the handle 2.

The conductive wire 6 is connected to the negative wire 5 at the front end of the ceramic heating body 3 by a first crown spring 8, so that a relatively large current can be transmitted, the connection stability is good, and the current transmission is stable.

A second crown spring 9 is connected to the middle of the ceramic heating body 3, the negative wire 5 is led out through the second crown spring 9, and the negative wire 5 is used for both power supply and temperature measurement output.

A third crown spring 10 is connected to the tail end of the ceramic heating body 3 and leads the positive wire 4, and the positive wire 4 is used for both power supply and temperature measurement.

The tail part of the handle 2 is connected to the ground wire 7 for ground connection to eliminate static electricity.

The positive wire 4 and the negative wire 5 are made of a thermocouple material. The thermocouple material is a material that performs temperature measurement by using the temperature difference reaction electromotive force generated between different materials and using the characteristic that the thermal electromotive force of the material changes with the temperature difference.

The ceramic heating body 3 uses a silicon nitride full-ceramic heating body, and has a smaller size than that of a conventional heating body, thereby improving the temperature control response speed and the service life of the ceramic heating body 3.

## Claims

1. A ceramic electric soldering iron, comprising a soldering iron head (1), a handle (2), a ceramic heating body (3), a positive wire (4) and a negative wire (5), **characterized in that** the ceramic electric soldering iron further comprises a conductive wire (6) and a ground wire (7), wherein the negative wire (5) is connected to the soldering iron head (1), the positive wire (4) is connected to the ceramic heating body (3), the conductive wire (6) is connected to the negative wire (5) at the front end of the ceramic heating body (3), the conductive wire (6) is further connected to a control measurement center, and the ground wire (7) is connected to the handle (2).

2. The ceramic electric soldering iron according to claim 1, **characterized in that** the conductive wire (6) is connected to the negative wire (5) at the front end of the ceramic heating body (3) by a first crown spring (8).

3. The ceramic electric soldering iron according to claim 1 or 2, **characterized in that** a second crown spring (9) is connected to the middle of the ceramic heating body (3), and the negative wire (5) is led out by the second crown spring (9).

4. The ceramic electric soldering iron according to claim 3, **characterized in that** a third crown spring (10) is connected to the tail end of the ceramic heating body (3), and the positive wire (4) is led out by the third crown spring (10).

5. The ceramic electric soldering iron according to claim 4, **characterized in that** the conductive wire (6) is connected to the ground wire (7) at the tail part of the handle (2).

6. The ceramic electric soldering iron according to claim 5, **characterized in that** the positive wire (4) and the negative wire (5) use a thermocouple material.

7. The ceramic electric soldering iron according to claim 6, **characterized in that** the ceramic heating body (3) uses a silicon nitride full-ceramic heating body.
